# EUROPEAN PATENT APPLICATION

(11) **EP 2 285 091 A2**
(43) Date of publication of application: **16.02.2011**
(21) Application number: 10153407.1
(22) Date of filing: 12.02.2010
(51) Int. Cl.: H04N 5/00, H04N 7/24

(54) **Device and method for receiving broadcasting signals**

(30) Priority: 11.08.2009 KR 20090073943
(71) Applicant: Electronics and Telecommunications Research Institute, Daejeon 305-350 (KR)
(72) Inventor: Bae, Byungjun, 302-777, Daejeon (KR); Lee, Ji Bong, 616-763, Busan (KR); Lim, Jong Soo, 301-831, Daejeon (KR); Lee, Soo In, 302-120, Daejeon (KR)
(74) Representative: Betten & Resch

(57) **Abstract**

A broadcasting signal receiving device demodulates received broadcasting signals with the terrestrial digital multimedia broadcasting mode and the advanced terrestrial digital multimedia broadcasting mode, checks an error of the demodulated high-speed information channel data, and selects a receiving mode of the broadcasting signal receiving device from among the terrestrial digital multimedia broadcasting mode and the advanced terrestrial digital multimedia broadcasting mode.

## Description

### BACKGROUND OF THE INVENTION

### (a) Field of the Invention

The present invention relates to a broadcasting signal receiving device and method. Particularly, the present invention relates to an advanced device and method for receiving terrestrial digital multimedia broadcasting signals.

### (b) Description of the Related Art

The advanced terrestrial digital multimedia broadcasting (AT-DMB) system has increased transmission capacity by applying the hierarchical modulation scheme to the existing terrestrial digital multimedia broadcasting (T-DMB) system. Hence, the AT-DMB system is required to support backward compatibility with the T-DMB system. To achieve this, a transmission channel of the AT-DMB system is classified as a basic area and an improved area, wherein the basic area is a transmission channel corresponding to the existing T-DMB signal, and the improved area is a transmission channel that is newly added for the AT-DMB signal.

Regarding the AT-DMB system, a transmitting part inserts signaling information for indicating an AT-DMB signal into the AT-DMB signal and transmits the AT-DMB signal so as to support backward compatibility with the T-DMB system. Accordingly, a receiving part senses that the received signal is an AT-DMB signal through the signaling information.

The transmitting part transmits the signaling information for indicating an AT-DMB signal by using a field that is not used from among a fast information channel (FIC) of the basic area. In addition, an AT-DMB receiving terminal senses it and performs hierarchical demodulation on the AT-DMB signal to use an AT-DMB broadcasting service, but the existing T-DMB receiving terminal cannot sense the signaling signal that is transmitted through the FIC and receives the T-DMB signal that is transmitted through the basic area.

Therefore, regarding the receiving side of the AT-DMB signal, the AT-DMB system has the problem of failing to provide perfect backward compatibility to the T-DMB system. The problem is not important when a mobile broadcasting network is configured with the AT-DMB system. However, when the AT-DMB system uses the same frequency as the existing T-DMB system, that is, in the case of the mobile broadcasting network in which the AT-DMB system and the T-DMB coexist, the FIC of the T-DMB is different from the FIC of the basic area of the AT-DMB system to generate mutual interference, and hence it is difficult to receive the T-DMB signal and the AT-DMB signal.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a broadcasting signal receiving device and method for efficiently identifying a T-DMB signal and an AT-DMB signal without signaling information.

An exemplary embodiment of the present invention provides a device for receiving broadcasting signals including: a demodulator for outputting high-speed information channel data by demodulating the received broadcasting signal with at least one of a terrestrial digital multimedia broadcasting (T-DMB) mode and a plurality of advanced terrestrial digital multimedia broadcasting (AT-DMB) modes; and a receiving mode selector for selecting a mode to be demodulated by the demodulator from among the T-DMB mode and the plurality of AT-DMB modes, checking the error for high-speed information channel data that are demodulated and output with the at least one mode, and selecting a receiving mode from among the T-DMB mode and the plurality of AT-DMB modes baed on the error checking result.

Another embodiment of the present invention provides a method for receiving broadcasting signals of a broadcasting signal receiving device including: outputting high-speed information channel data by demodulating the received broadcasting signal per T-DMB mode and at least one AT-DMB mode; checking an error for the high-speed information channel data that are demodulated per the T-DMB mode and at least one AT-DMB mode, and selecting a receiving mode of the broadcasting signal receiving device from among the T-DMB mode and the at least one AT-DMB mode based on the error checking result; setting a demodulation method of the broadcasting signal receiving device corresponding to the receiving mode; and demodulating the broadcasting signal by using the set demodulation method.

### BRIEF DESCRIPTION OF THE DRAWINGS

FIG. 1 shows a block diagram of a broadcasting signal receiving device according to an exemplary embodiment of the present invention.
FIG. 2 shows a flowchart of a broadcasting signal receiving method according to an exemplary embodiment of the present invention.
FIG. 3 shows a flowchart for a broadcasting signal receiving device to select a receiving mode according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout the specification, unless explicitly described to the contrary, the word "comprise" and variations such as "comprises" or "comprising" will be understood to imply the inclusion of stated elements but not the exclusion of any other elements.

A broadcasting signal receiving device and method according to an exemplary embodiment of the present invention will now be described with reference to accompanying drawings.

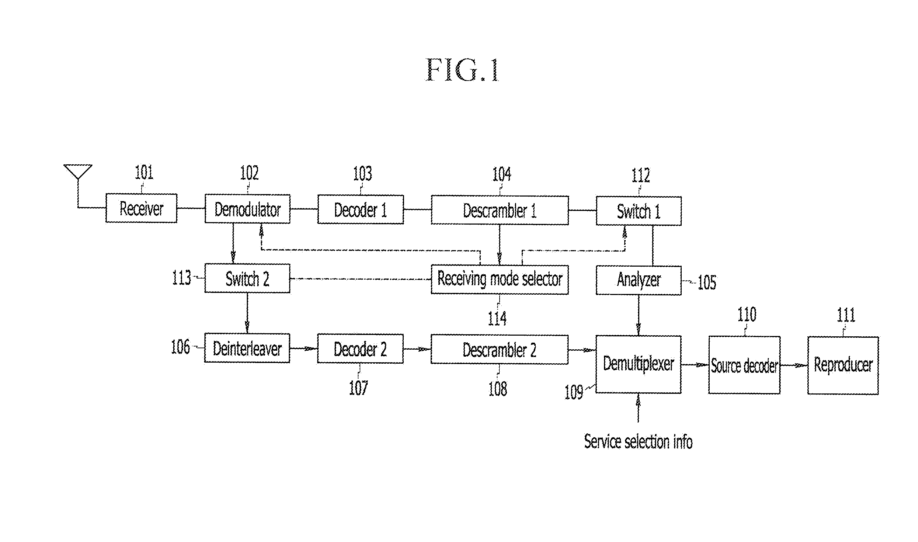

FIG. 1 shows a block diagram of a broadcasting signal receiving device according to an exemplary embodiment of the present invention.

Referring to FIG. 1, the broadcasting signal receiving device includes a receiver 101, a demodulator 102, a first decoder 103, a first descrambler 104, an analyzer 105, a deinterleaver 106, a second decoder 107, a second descrambler 108, a demultiplexer 109, a source decoder 110, a reproducer 111, a first switch 112, a second switch 113, and a receiving mode selector 114.

The receiver 101 converts the broadcasting signal that is received through an antenna into a baseband signal and outputs the same.

The demodulator 102 demodulates the broadcasting signal output by the receiver 101 by using the demodulation method corresponding to the input control signal, divides the demodulated data into main service channel (MSC) data and FIC data, and outputs them.

The first decoder 103 channel decodes the FIC data output by the demodulator 102, and the first descrambler 104 descrambles the decoded FIC data and outputs the descrambled data.

The analyzer 105 analyzes the input FIC data to output FIC information.

The deinterleaver 106 performs time deinterleaving. That is, the deinterleaver 106 temporally deinterleaves the input MSC data and outputs deinterleaved MSC data, and the second decoder 107 channel decodes the MSC data deinterleaved by the deinterleaver 106 and outputs decoded data. Also, the second descrambler 108 descrambles the MSC data decoded by the second decoder 107, and outputs descrambled data.

The demultiplexer 109 demultiplexes the MSC data into at least one service data based on the FIC information output by the analyzer 105, selects one of the at least one service data based on input service selection information, and outputs it.

The source decoder 110 source decodes the service data output by the demultiplexer 109 and outputs resultant data, and the reproducer 111 reproduces the service data output by the source decoder 110 into a broadcasting program and outputs it.

The first switch 112 transmits the FIC data output by the first descrambler 104 to the analyzer 105 or intercepts the same based on a first switching signal, and the second switch 113 transmits the MSC data output by the demodulator 102 to the deinterleaver 106 or intercepts the same based on a second switching signal.

The receiving mode selector 114 outputs a control signal for controlling the demodulator 102 so as to demodulate the received broadcasting signal with the T-DMB mode and at least one AT-DMB mode. Here, the AT-DMB mode is classified as an AT-DMB B mode and an AT-DMB Q mode, and the AT-DMB B mode performs the binary phase shift keying (BPSK) demodulation, while the AT-DMB Q mode performs the quadrature phase shift keying (QPSK) demodulation. Also, the T-DMB mode receives the T-DMB signal, the AT-DMB B mode receives the AT-DMB signal considering a mobile condition, and the AT-DMB Q mode receives the AT-DMB signal considering a fixed condition.

The receiving mode selector 114 checks the error of the FIC data output by the first descrambler 104, and selects the receiving mode of the broadcasting signal receiving device from the T-DMB mode, the AT-DMB B mode, and the AT-DMB Q mode. Here, the cyclic redundancy check (CRC) is used for the error checking method in the exemplary embodiment of the present invention, and other methods are also available in the present invention.

The receiving mode selector 114 outputs a control signal to the demodulator 102 to perform demodulation in the finally selected receiving mode, and outputs a first switching signal and a second switching signal so as to transmit the FIC data and MSC data that are demodulated according to the selected receiving mode and are output to the analyzer 105 and the deinterleaver 106.

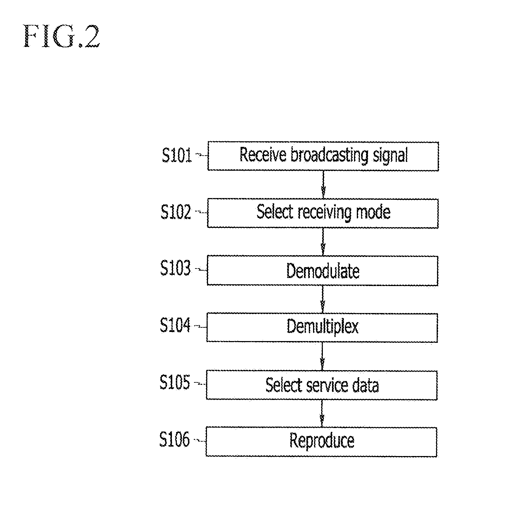

FIG. 2 shows a flowchart of a broadcasting signal receiving method by a broadcasting signal receiving device according to an exemplary embodiment of the present invention.

Referring to FIG. 2, when receiving a broadcasting signal through the receiver 101 S101, the broadcasting signal receiving device selects the receiving mode by using the FIC data included in the received broadcasting signal (S102). For this, the receiving mode selector 114 of the broadcasting signal receiving device controls the demodulator 102 to perform demodulation with the T-DMB mode and the at least one of AT-DMB mode by using the control signal, performs CRC on the FIC data that are demodulated and output for respective modes, and finally selects the receiving mode of the broadcasting signal receiving device based on the CRC result. Here, the CRC-performed FIC data are decoded and descrambled by the first decoder 103 and the first descrambler 104.

When the receiving mode is selected in S102, the broadcasting signal receiving device sets a demodulation of the demodulator 102 corresponding to the selected receiving mode, and demodulates the broadcasting signal received through the demodulator 102 to output the FIC data and the MSC data (S103).

The broadcasting signal receiving device demultiplexes the MSC data into at least one service data through the demultiplexer 109 and outputs the same (S104). Here, the demultiplexer 109 demultiplexes the MSC data based on the FIC information acquired by analyzing the FIC data by the analyzer 105, and the deinterleaver 106, the second decoder 107, and the second descrambler 108 deinterleaves, decodes, and descrambles the demultiplexed MSC data, respectively.

When at least one service data is generated through the demultiplexing of S104, the broadcasting signal receiving device selects service data corresponding to the service selected by the user from among at least one service data based on a service control signal input by the user (S105), source decodes the selected service data, and reproduces into a broadcasting program to be output (S106).

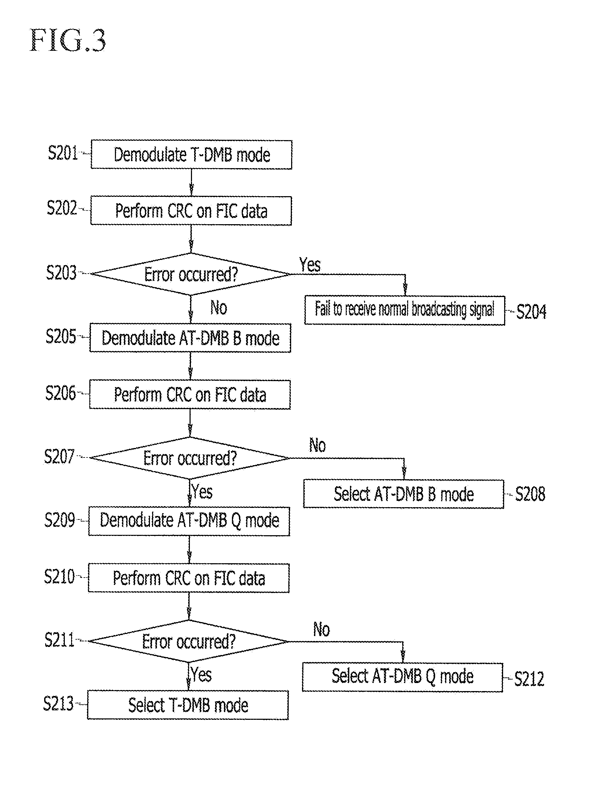

FIG. 3 shows a flowchart for a broadcasting signal receiving device to select a receiving mode according to an exemplary embodiment of the present invention.

Referring to FIG. 3, upon receiving the broadcasting signal, the broadcasting signal receiving device controls the demodulator 102 to demodulate the broadcasting signal with the T-DMB mode and outputs FIC data (S201).

The broadcasting signal receiving device performs CRC on the FIC data through the receiving mode selector 114 (S202), and checks whether a CRC error is generated (S203). When an error occurs, the broadcasting signal receiving device determines that the broadcasting signal is not received and terminates the receiving mode selection process (S204).

When no errors occur in S203, the broadcasting signal receiving device demodulates the broadcasting signal received through the demodulator 102 with the AT-DMB B mode to output FIG data (S205), and performs CRC on the FIC data that are demodulated with the AT-DMB B mode through the receiving mode selector 114 (S206). The broadcasting signal receiving device checks whether an error occurs according to the CRC performance result (S207), and when no errors have occurred, the broadcasting signal receiving device selects the AT-DMB B mode of the broadcasting signal receiving device as a receiving mode (S208).

When an error has occurred in S207, the broadcasting signal receiving device demodulates the broadcasting signal that is received through the demodulator 102 with the AT-DMB Q mode to output the FIC data (S209), and performs CRC on the FIC data that are demodulated with the AT-DMB Q mode through the receiving mode selector 114 (S210). The broadcasting signal receiving device checks whether an error occurs according to the CRC performance result (S211), and when no errors have occurred, the broadcasting signal receiving device selects the AT-DMB Q mode of the broadcasting signal receiving device as a receiving mode (S212).

When an error has occurred in S211, the broadcasting signal receiving device selects the T-DMB mode of the broadcasting signal receiving device as a receiving mode (S213).

As described above, the broadcasting signal receiving device according to the exemplary embodiment of the present invention can identify whether the received broadcasting signal is a T-DMB signal or an AT-DMB signal without including additional signaling information in the broadcasting signal.

The above-described embodiments can be realized through a program for realizing functions corresponding to the configuration of the embodiments or a recording medium for recording the program in addition to through the above-described device and/or method, which is easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A device for receiving broadcasting signals, comprising:
a demodulator for outputting high-speed information channel data by demodulating the received broadcasting signal with at least one of a terrestrial digital multimedia broadcasting (T-DMB) mode and a plurality of advanced terrestrial digital multimedia broadcasting (AT-DMB) modes; and
a receiving mode selector for selecting a mode to be demodulated by the demodulator from among the T-DMB mode and the plurality of AT-DMB modes, checking an error for high-speed information channel data that are demodulated and output with the at least one mode, and selecting a receiving mode from among the T-DMB mode and the plurality of AT-DMB modes baed on the error checking result.

2. The device of claim 1, wherein
the plurality of AT-DMB modes include an AT-DMB B mode using the binary phase shift keying (BPSK) method and an AT-DMB Q mode using the quadrature phase shift keying (QPSK) method, and
the receiving mode selector controls the demodulator to perform demodulation in the order of the T-DMB mode, the AT-DMB B mode, and the AT-DMB Q mode.

3. The device of claim 2, wherein
the receiving mode selector selects the T-DMB mode as the receiving mode when first high-speed information channel data that are demodulated with the T-DMB mode and are output have no error and second high-speed information channel data that are demodulated with the AT-DMB B mode and are output and third high-speed information channel data that are demodulated with the AT-DMB Q mode and are output have errors,
the receiving mode selector selects the AT-DMB Q mode as the receiving mode when the first and second high-speed information channel data have no errors, and
the receiving mode selector selects the AT-DMB Q mode as the receiving mode when the first and third high-speed information channel data have no errors.

4. The device of claim 1, 2 or 3, wherein
the demodulator demodulates the broadcasting signal to output predetermined service channel data, and the device further includes:
a deinterleaver for temporally deinterleaving the predetermined service channel data demodulated and output by the demodulator, and outputting the temporally deinterleaved service channel data;
a decoder for channel decoding the predetermined service channel data that are temporally deinterleaved and output, and outputting the channel decoded service channel data; and
a descrambler for descrambling the predetermined service channel data that are channel decoded and output, and outputting the descrambled service channel data.

5. The device of claim 4, further including:
an analyzer for outputting high-speed information channel information by analyzing high-speed information channel data that are demodulated and output by the demodulator;
a demultiplexer for demultiplexing predetermined service channel data that are descrambled and output by the descrambler into at least one service data based on the high-speed information channel information, and selecting and outputting the at least one service data based on input service selection information;
a source decoder for source decoding the service data that are output by the demultiplexer; and
a reproducer for reproducing the service data that are source decoded and output.

6. The device of claim 5, wherein
when the receiving mode selector selects the receiving mode, the demodulator performs demodulation with the selected receiving mode.

7. The device of claim 6, wherein the device further includes:
a first switch for transmitting the high-speed information channel data that are demodulated and output by the demodulator to the analyzer or intercepting the same; and
a second switch for transmitting the predetermined service channel data that are demodulated and output by the demodulator to the deinterleaver or intercepting the same, and
the receiving mode selector controls the first switch and the second switch to intercept high-speed information channel data and predetermined service channel data demodulated and output by the demodulator before the receiving mode is selected, and to transmit high-speed information channel data and predetermined information channel data that are demodulated and output with the receiving mode by the demodulator to the analyzer and the deinterleaver when the receiving mode is selected.

8. A method for receiving broadcasting signals of a broadcasting signal receiving device, comprising:
outputting high-speed information channel data by demodulating the received broadcasting signal per T-DMB mode and at least one AT-DMB mode;
checking an error for the high-speed information channel data that are demodulated per the T-DMB mode and at least one AT-DMB mode, and selecting a receiving mode of the broadcasting signal receiving device from among the T-DMB mode and the at least one AT-DMB mode based on the error checking result;
setting a demodulation method of the broadcasting signal receiving device corresponding to the receiving mode; and
demodulating the broadcasting signal by using the set demodulation method.

9. The method of claim 8, wherein
the selecting includes
determining that no normal broadcasting signal is received when the high-speed information channel data demodulated with the T-DMB mode have an error.

10. The method of claim 8 or 9, wherein
the selecting further includes:
checking an error of the high-speed information channel data that are demodulated with the at least one AT-DMB mode when the high-speed information channel data demodulated with the T-DMB mode have no errors; and
selecting the T-DMB mode as the receiving mode when the high-speed information channel data demodulated with the at least one AT-DMB mode have an error.

11. The method of claim 8, 9 or 10, wherein
the at least one AT-DMB mode includes at least one of a first AT-DMB mode considering a mobile condition and a second AT-DMB mode considering a fixed condition, and
the selecting includes:
selecting the first AT-DMB mode as the receiving mode when the high-speed information channel data that are demodulated with the first AT-DMB mode have no errors; and
selecting the second AT-DMB mode as the receiving mode when the high-speed information channel data demodulated with the first AT-DMB mode have an error and the high-speed information channel data demodulated with the second AT-DMB mode have no errors.

12. The method of one of claims 8 to 1, wherein further including, after the demodulation:
outputting high-speed information channel information generated by analyzing high-speed information channel data generated by demodulating and outputting the broadcasting signal;
outputting at least one service data generated by demultiplexing predetermined service channel data generated by demodulating and outputting the broadcasting signal based on the high-speed information channel information; and
reproducing service data corresponding to input service selection information from among the at least one service data as a broadcasting program.
